# EUROPEAN PATENT SPECIFICATION

(11) **EP 1 419 047 B1**
(45) Date of publication and mention of the grant of the patent: **02.07.2008**
(21) Application number: 02739430.3
(22) Date of filing: 29.05.2002
(51) Int. Cl.: G11B 7/24, B32B 3/00, B32B 19/00

(54) **METHOD OF MANUFACTURING THIN FLUORESENT INFORMATION LAYER ON THE RELIEF SURFACE OF CARRIER**
VERFAHREN ZUR HERSTELLUNG EINER DÜNNEN FLUORESZIERENDEN INFORMATIONSSCHICHT AUF DER RELIEFOBERFLÄCHE EINES TRÄGERS
PROCEDE POUR PRODUIRE UNE MINCE COUCHE D'INFORMATIONS FLUORESCENTE SUR LA SURFACE EN RELIEF D'UN SUPPORT

(30) Priority: 29.05.2001 US 293537 P
(43) Date of publication of application: 19.05.2004
(73) Proprietor: D Data Inc., Timonium, MD 21093 (US)
(72) Inventor: DOROZHKINA, Galina, 141700 Dolgoprodnij (RU); LEZHNEV, Aleksei, 121609 Moscow (RU); LEVICH, Eugene, New York, NY 10036 (US); PEBALK, Dmitry, 113452 Moscow (RU)
(74) Representative: Holme, Annelise
(86) International application number: PCT/US2002/016687
(87) International publication number: WO 2002/096633

(56) References cited:
- WO-A-01/53065
- US-A- 4 965 153
- US-A- 5 669 995
- US-A- 6 039 898

## Description

### FIELD OF THE INVENTION

The present invention is related to a method of manufacturing a multilayer fluorescent information carrier and more particular to the method utilizing a mixture of organic solvents for a photopolymeric composition (PPC).

### DESCRIPTION OF RELATED ART

In digital storage, whether of software, music, motion pictures, or the like, it has been desired to store ever more information in ever less space. Compact discs have been in use for about two decades to store music, software, and other materials in digital form. However, the fact that a compact disc has only one recording layer limits its information capacity.

To increase the capacity relative to a traditional compact disc, optical memory media with multiple layers have been developed. However, when such media are read by reflection of coherent light, parasitic reflection can occur at layer boundaries. That reflection and the resulting interference impair reading.

Examples of such devices, utilizing the multiplayer fluorescent carrier are disclosed in U.S. Pat. No.6,039,898 and in WO 99/47327. Such carriers exhibit high recording density, contrast, and signal-to -noise ratio. It is common to use fluorescent recording materials that, when exposed to reading light at one wavelength, fluoresce at a different wavelength. The problem of parasitic reflection can be solved by filtering out reflected light at the reading wavelength. Also, since the fluorescent light is incoherent, there is no problem of interference.

However, improvements remain to be made in the manufacturing of such carriers. In particular, it would be desirable to decrease both the thickness and the thickness variation of the recording layers while increasing production speed and improving the information reproduction characteristics.

Such improvements are disclosed in previous PCT Application US01/01 573 to Tri D Store IP, LLC, entitled "Manufacturing Method for Multilayer Fluorescent Information Carriers." The multilayer fluorescent information carrier comprises a photopolymerizable composition applied to a solid base having a relief pattern. A transparent film layer is applied on top of the photopolymerized composition. The three layers are spun in a centrifuge to cause a thin, even distribution of the photopolymerizable composition, which is photopolymerized. The resulting replica is separated from the relief pattern and has a fluorescent material applied thereto. Alternatively, the replica has a non-fluorescent material applied thereto, and the non-fluorescent material is made fluorescent through diffusion. Multiple information layers thus formed can be glued together to form a multilayer storage medium.

However, improvements still remain to be made in the manufacture of such carriers. In particular, it would be desirable to:
increase useful fluorescent signal, extracted from the informational pits;
increase the signal contrast; and
obtain more even fluorescent coverage.

### SUMMARY OF THE INVENTION

The principal object of the invention comprises the utilization of a mixture of at least one ketone having a boiling temperature in the range of 98-120 °C with one or more other solvents having a boiling temperature of about 80 °C or lower. This mixture is used for the photopolymeric composition (PPC) with the fluorescent dye.

During the procedure, a thin-layer fluorescent polymer coated with distributed fixed luminescent centers can be prepared by using photosolidified liquid polymer compositions containing luminophores. For this purposes, onto a film formed on a centrifuge, a composition is spin-coated forming a thin liquid film distributed across the replica surface in conformity with the shape of its relief and consisting predominantly of photosolidified, generally by cation and/or radial mechanisms, monomers and oligomers and dopants determining spectral and luminescent, physical and mathematical, adhesive and other characteristics of the polymer coat following its solidification by UV light. The liquid composition applied should possess a good spreadability on the replica surface, high adhesion, and ease of forming a liquid and solidified film uniformely spread on the surface and differentially in terms of the replica relief, which can be attained through using a specific composition as well as coating and solidification conditions. Photosolidification of the composition results in a bilayer structure with a polymeric replica and thin-film fluorescent polymer coat. The bilayer structure represents as a unit a single layer a fluorescent information carrier. From similarly generated single layer carriers, there can be fabricated multilayer fluorescent information carriers of various types by sealing them together.

Special agreement zone, which align conditions of pits occupancy in the zone of input tracks and in the disk areas, was suggested to improve the occupancy of disk input tracks having the initial track located at radius R1. Such a zone could begin at radius R2<R1 and should finish at radius R3=R1. Usually even disk surface reside before input tracks zone therefore pit occupancy conditions at centrifuge are different for first tracks of input tracks and those for whole disk. To remove this disadvantage the disk surface relief in the agreement zone should be the same as in the region of input tracks. The using same distances between tracks, and same depth, width could realize this and density of pits in input track region and in agreement zone. Zone width is selected in a such way that pit occupancy conditions in the beginning of input track region will be the same as for whole disk area.

A liquid composition for a thin-film polymer fluorescent information layer (IL) according to the present invention comprises:
a polymerizable substance (PS) consisting of one or more substances;
a polymerization photoinitiator consisting of one or more substances;
a fluorescent dye (FD) consisting of one or more substances, including dyes with functional groups reactive with respect to PS ; and
an organic solvent consisting of one or more substances, including ones with functional groups reactive with respect to PS.

In a preferred embodiment, the organic solvent includes a mixture of at least one ketone with another solvent.

### EXAMPLE 1

Polymeric substance (PS) is prepared by mixing components consisting of Bis (3,4-epoxycyclohexylmethyl) adipate (60% wt.) and Neopentylglycoldiglycidyl ether (40% wt.). The fluorescent dye (FD) Oxazine-1 is added to the PS in the amount of 0,02 mol/l. The mixture of solvents consisting of 10% wt. of isobutyl-methylketone, 50% wt. of 3- methyl-2-butanone and 40% wt. of 2-propanol are prepared. The PS-FD composition is dissolved in the mixture of the solvents at the temperature of 60°C degree stirred for 4 hours to obtain a homogenous 4% wt. solution. The 6 pph mixed Triarylsulfonium Hexafluorophosphate salt (50% wt. solution in propylene carbonate) in ratio to the PS were applied. The obtained solution is filtered and applied to the PPC-replica.

### EXAMPLE 2

Similar to EXAMPLE 1, except that the following mixture of PS is used: Bis (3,4-epoxycyclohexylmethyl) adipate (80 % wt.), trimethylol propanetriglicidyl ether (15% wt.) and diethylene glycol (5% wt.). A mixture of 67% wt 3-methyl-2-butanone and 33% wt acetonitrile is used as solvent. The 6 pph mixed Triarylsulfonium Hexafluorophosphate salt (50% wt solution in propylene carbonate) is used as the photopolymerization initiator. Rhodamine-700 in amount 0.03 mol/l is used as the fluorescent dye. PS-FD concentration was 3.3 % wt.

### EXAMPLE 3

Similar to EXAMPLE 1, except that the following mixture of PS is used: Bis (3,4-epoxycyclohexylmethyl) adipate (40 % wt.), 3,4-Epoxycyclohexylmethyl-3, 4-epoxycyclohexane Carboxylate- (30 % wt), trimethylolpropane trivinyl ether (25 % wt.) and ε-Caprolactone Triole (Mw=360)-(5% wt.). A mixture of 16.7% wt 3-methyl-2-butanone and 83.3% wt dichloromethane is used as solvent. The 10 pph mixed Triarylsulfonium Hexafluorophosphate salt (50% wt. solution in propylene carbonate) is used as the photopolymerization initiator. Rhodamine-700 in amount 0.025 mol/l is used as the fluorescent dye. PS-FD concentration was 0.9 % wt.

### EXAMPLE 4

Similar to EXAMPLE 1, except that the following mixture of PS is used: Bis (3,4-epoxycyclohexylmethyl) adipate (40 % wt.), 3,4-Epoxycyclohexylmethyl-3, 4-epoxycyclohexane Carboxylate (50 % wt), ε-Caprolactone Triole (Mw=300)-(8 % wt.) and poly (vinylchloride-co-vinyl acetate-co-2-hydroxypropyl acrylate) Hydroxyl number=99 (2 % wt). A mixture of 28.6 % wt isobutyl-methylketone and 71.4 % wt Acetone is used as solvent. The 6 pph mixed Triarylsulfonium Hexafluorophosphate salt (50% wt. solution in propylene carbonate) used as the photopolymerization initiator. Rhodamine-700 in amount 0.025 mol/l and 0.005 mol/l Rhodamine-800 are used as the fluorescent dye. PS-FD concentration was 1.42 % wt.

### EXAMPLE 5

Similar to EXAMPLE 1, except that the following mixture of PS is used: Bis (3,4-epoxycyclohexylmethyl) adipate (40 % wt.), 3,4-Epoxycyclohexylinethyl-3, 4-epoxycyclohexane Carboxylate (50 % wt), ε-Caprolactone Triole (Mw=300)-(9 % wt.) and poly (vinylbutural-co-vinylalcohol-co-vinyl acetate) (1 % wt). A mixture of 67 % wt 3-methyl-2-butanone and 23 % wt Acetone and 10% wt ethanol is used as solvent. The 4 pph mixed Triarylsulfonium Hexafluoroantimonate salt (50 % wt solution in propylene carbonate) and 6 pph mixed Triarylsulfonium Hexafluorophosphate salt (50% wt. solution in propylene carbonate) (4 % wt) are used as the photopolymerization initiator. Rhodamine-700 in amount 0.025 mol/l is used as the fluorescent dye. PS-FD concentration was 3.3 % wt. Fluorescent signal-to-noise ratio was 10-12 for the DVD-replica.

### EXAMPLE 6

Similar to EXAMPLE 1, except that the following mixture of PS is used: 3,4-Epoxycyclohexylmethyl-3, 4-epoxycyclohexane Carboxylate (90 % wt), ε-Caprolactone Triole (Mw=300)-(9 % wt.) and poly (vinylbutural-co-vinylalcohol-co-vinyl acetate) (1 % wt). A mixture of 66 % wt isobuthyl-methylketone and 34 % wt Acetone % wt is used as solvent. The 6 pph mixed Triarylsulfonium Hexafluoroantimonate salt (50 % wt solution in propylene carbonate) is used as the photopolymerization initiator. Rhodamine-700 in amount 0.025 mol/l is used as the fluorescent dye. PS-FD concentration was 2.5 % wt.

### EXAMPLE 7

Similar to EXAMPLE 1, except that the following mixture of PS is used: Bis (3,4-epoxycyclohexylmethyl) adipate (25 % wt.), 3,4-Epoxycyclohexylmethyl-3, 4-epoxycyclohexane Carboxylate (35 % wt), neopentyl glycol diglycidyl ether (25 % wt), poly (o-cresyl glycidyl ether) co-formaldehyde) Mw=540 (10 % wt), ε-Caprolactone Triole (Mw=300)-(5 % wt.). A mixture of 28.6 % wt 3-methyl-2-butanone and 71.4 % wt methyl acetate is used as solvent. The 4 pph mixed Triarylsulfonium Hexafluoroantimonate salt (50 % wt solution in propylene carbonate) and mixed Triarylsulfonium Hexafluorophosphate salt (50% wt. solution in propylene carbonate) (4 % wt) in ratio to PS are used as the photopolymerization initiator. Rhodamine-700 in amount 0.025 mol/l and 0.005 mol/l Rhodamine-800 are used as the fluorescent dye. PS-FD concentration was 1.42 % wt.

### EXAMPLE 8

Similar to EXAMPLE 1, except that the following mixture of PS is used: 3,4-Epoxycyclohexylmethyl-3, 4-epoxycyclohexane Carboxylate (85 % wt), poly (o-cresyl glycidyl ether) co-formaldehyde) Mw=540 (5 % wt), ε-Caprolactone Triole (Mw=300)(10 % wt.). A mixture of 24% wt 3-methyl-2-butanone, 10% isobutylketone 33 % wt Acetone % wt and 33% wt. methylethylketone are used as solvent. The 4 pph mixed Triarylsulfonium Hexafluoroantimonate salt (50 % wt solution in propylene carbonate) and mixed Triarylsulfonium Hexafluorophosphate salt (50% wt. solution in propylene carbonate) (4 % wt) in ratio to PS are used as the photopolymerization initiator. Mixture of 0.015 mol/l Oxazine-1 and Rhodamine-700 in amount 0.025 mol/l and 0.005 mol/l Rhodamine-800 are used as the fluorescent dye. PS-FD concentration was 1.67 % wt.

### EXAMPLE 9

Similar to EXAMPLE 1, except that the following mixture of PS is used: Bis (3,4-epoxycyclohexylinethyl) adipate (35 % wt.), 3,4-Epoxycyclohexylinethyl-3, 4-epoxycyclohexane Carboxylate (25 % wt), cycloaliphatic epoxide 4206 (Union Carbide Inc product) (25 % wt), poly (o-cresyl glycidyl ether) co-formaldehyde) Mw=540 (10 % wt), ε-Caprolactone Triole (Mw=300)-(5 % wt). A mixture of 40 % wt 3-methyl-2-butanone and 60 % wt methyl chlorophorm is used as solvent. The 4 pph mixed Triarylsulfonium Hexafluoroantimonate salt (50 % wt solution in propylene carbonate) and mixed Triarylsulfonium Hexafluorophosphate salt (50% wt. solution in propylene carbonate) (4 % wt) in ratio to PS and 10% wt. 1-Chloro-4-propoxy-9H-thioxanthen-9-one in ratio to the catalyst weight are used as the photopolymerization initiator. Rhodamine-700 in amount 0.025 mol/l and 0.005 mol/l Red-300 (Basf) (a dye based on perylene-1,6,7,12-tetraphenoxy-3,4,9,10-tetracarboxylic acid bis(2,6-diisopropylanilide)) are used as the fluorescent dye. PS-FD concentration was 2 % wt.

### EXAMPLE 10

Similar to EXAMPLE 5, except that the following mixture of PS is used: Bis (3,4-epoxycyclohexylmethyl) adipate (36 % wt.), 3,4-Epoxycyclohexylmethyl-3, 4-epoxycyclohexane Carboxylate (50 % wt), ε-Caprolactone Triole (Mw=300)-(10 % wt) and poly (vinylchloride-co-isobutyl vinyl ether) (4 % wt). A mixture of 50 % wt 3-methyl-2-butanone and 50 % wt 1,1,dichloroethane is used as solvent. The 4 pph mixed Triarylsulfonium Hexafluoroantimonate salt (50 % wt solution in propylene carbonate) and mixed Triarylsulfonium Hexafluorophosphate salt (50% wt. solution in propylene carbonate) (4 % wt) in ratio to PS are used as the photopolymerization initiator. Rhodamine-700 in amount 0.025 mol/l is used as the fluorescent dye. PS-FD concentration was 2.5 % wt.

### EXAMPLE 11

Similar to EXAMPLE 5, except that the mixture of 20 % wt 3-methyl-2-butanone and 80 % wt Acetone is used as solvent. PS-FD concentration was 1% wt.

### EXAMPLE 12

Similar to EXAMPLE 4, except that the following mixture of 40 % wt 3-methyl-2-butanone and 60 % wt ethanol is used as solvent. PS-FD concentration was 2% wt.

### EXAMPLE 13

Similar to EXAMPLE 6, except that the mixture of 34 % wt 3-methyl-2-butanone and 66 % wt Acetone is used as solvent. PS-FD concentration was 1.67 % wt.

### EXAMPLE 14

Similar to EXAMPLE 5, except that the mixture of PS is used: Bis (3,4-epoxycyclohexylmethyl) adipate (36 % wt.), 3,4-Epoxycyclohexylmethyl-3, 4-epoxycyclohexane Carboxylate (50 % wt), ε-Caprolactone Triole (Mw=300)-(10 % wt) and poly (vinylformal) (4 % wt). A mixture of 50 % wt 3-methyl-2-butanone and 50 % wt tetrahydrofurane is used as solvent. The 4 pph mixed Triarylsulfonium Hexafluoroantimonate salt (50 % wt solution in propylene carbonate) and mixed Triarylsulfonium Hexafluorophosphate salt (50% wt. solution in propylene carbonate) (4 % wt) in ratio to PS are used as the photopolymerization initiator. Rhodamine-700 in amount 0.025 mol/l is used as the fluorescent dye. PS-FD concentration was 2.5 % wt.

## Claims

1. A method of manufacturing thin fluorescent information layer on the relief surface of carrier comprising the steps of:
(a) providing a photopolymeric composition comprising a polymerizable substance (PS) and a fluorescent dye (FD);
(b) providing a solvent mixture comprising at least one ketone;
(c) dissolving the composition obtained in the solvent mixture of the solvents;
(d) adding a polymerization photoinitiator to the resulting composition;
(e) filtering the composition of step (d); and
(f) applying said composition to the surface of said carrier.

2. The method of Claim 1, wherein the polymerizable substance (PS) is selected from the group consisting of bis (3,4-epoxyoyclohexylmethyl) adipate, neopentyl glycol diglycidyl ether, trimethylol propanetriglicidyl ether, diethylene glycol, 3,4-epoxycyclohexylmethyl-3, 4-epoxycyclohexane carboxylate, trimethylolpropane trivinyl ether, ε-Caprolactone Triole, poly (vinylchloride-co-vinylacetate-co-2-hydroxypropyl acrylate) Hydroxyl, poly (o-cresyl glycidyl ether) co-formaldehyde, cycloaliphatic epoxide 4206, poly(vinylchloride-co-isobutyl vinyl ether and poly(vinylformal).

3. The method of Claims 1 & 2, wherein the solvent mixture includes one or more ketones selected from the group consisting of isobutyl-methylketone, 3- methyl-2-butanone, acetone, methyl ethyl ketone, and mixtures thereof.

4. The method of claims 1 and 2, wherein the solvent mixture include isobutylketone.

5. The method of Claim 1, wherein the polymerization photoinitiator in the step (d) is selected from the group consisting of triarylsulfonium hexafluorophosphate salt and/or triarylsulfonium hexafluoroantimonate salt.

6. The method of Claim 1, wherein the fluorescent dye (FD) is selected from the group consisting of oxazine-1, rhodamine 700, rhodamine-800 and perylene-1,6,7,12-tetraphenoxy-3,4,9,10-tetracarboxylic acid bis(2,6-diisopropylanilide).

7. The method of Claims 1-6, wherein the solvents are selected from the group consisting of ketones having a boiling temperature of 98-120 °C and other solvents having the boiling temperature not higher than about 80 °C.

8. The method of Claims 1-7, wherein the dissolving of the PS-FD composition is performed by strirring said composition for four hours at 60 °C degree to obtain a 4% homogenous solution.

9. The method of Claims 1-8 comprising a multilayer fluorescent information carrier, wherein each layer is separately informed and joined together as a unit.

## Patentansprüche

1. Verfahren zur Herstellung einer dünnen fluoreszierenden Informationsschicht auf der Reliefoberfläche eines Trägers, mit den Schritten:
(a) Bereitstellen einer Photopolymerzusammensetzung mit einer polymerisierbaren Substanz (PS) und einem Fluoreszenzfarbstoff (FD);
(b) Bereitstellen einer Lösungsmixtur mit wenigstens einem Keton;
(c) Lösen der erhaltenen Zusammensetzung in der Lösungsmixtur aus den Lösungsmitteln;
(d) Hinzufügen eines Polymerisationsphotoinitiators zur resultierenden Zusammensetzung;
(e) Filtern der Zusammensetzung von Schritt (d); und
(f) Aufbringen dieser Zusammensetzung auf die Oberfläche des Trägers.

2. Verfahren nach Anspruch 1, wobei die polymerisierbare Substanz (PS) ausgewählt ist aus der Gruppe bestehend aus bis(3,4-epoxycyclohexylmethyl)adipinat, Neopentylglykol-diglycidylether, Trimethylol-propantriglicidylether, Diethylenglycol, 3,4 Epoxycyclohexylmethyl-3, 4-Epoxycyclohexancarboxylat, Trimethylolpropantrivinylether, -Caprolactontriol, poly(Vinylchlorid-co-Vinylacetat-co-2 Hydroxypropyl acrylat)hydroxyl, poly(o-Cresyl Glycidyl Ether) co-Formaldehyd, cycloaliphatisches Epoxid 4206, poly(Vinylchlorid-co-Isobutylvinylether und poly(Vinylformal).

3. Verfahren nach Anspruch 1 und 2, wobei die Lösungsmixtur ein oder mehrere Ketone enthält ausgewählt aus der Gruppe bestehend aus Isobutylmethylketon, 3-Methyl-2 butanon, Aceton, Methylethylketon und Mischungen dieser.

4. Verfahren nach Anspruch 1 und 2, wobei die Lösungsmixtur Isobutylketon enthält.

5. Verfahren nach Anspruch 1, wobei der Polymerisationsphotoinitiator von Schritt (d) ausgewählt ist aus der Gruppe bestehend aus Triarylsulfonium-Hexafluorophosphat-Salz und / oder Triarylsulfonium-Hexafluoroantimonat-Salz.

6. Verfahren nach Anspruch 1, wobei der Fluoreszenzfarbstoff (FD) ausgewählt ist aus der Gruppe bestehend aus Oxazin-1, Rhodamin-700, Rhodamin-800 und Perylen-1,6,7,12-tetraphenoxy-3,4,9,10-tetracarbonsäure bis(2,6-diisopropylanilid).

7. Verfahren nach den Ansprüchen 1-6, wobei die Lösungsmittel ausgewählt sind aus der Gruppe bestehend aus Ketonen mit einer Siedetemperatur von 98-120 °C und anderen Lösungsmitteln mit einer Siedetemperatur nicht höher als ungefähr 80 °C.

8. Verfahren nach den Ansprüchen 1-7, wobei das Lösen der PS-FD Zusammensetzung durch Rühren der Zusammensetzung für vier Stunden bei 60 °C erfolgt, um eine 4 %-ige homogene Lösung zu erhalten.

9. Verfahren nach den Ansprüchen 1-8 mit einem mehrschichtigen fluoreszierenden Informationsträger, wobei jede Schicht separat mit Information versehen und zu einer Einheit verbunden worden ist.

## Revendications

1. Procédé de fabrication d'une couche mince d'informations fluorescente sur la surface en relief d'un support comprenant les étapes consistant à :
(a) fournir une composition photopolymérique comprenant une substance polymérisable (PS) et un colorant fluorescent (FD) ;
(b) fournir un mélange solvant comprenant au moins une cétone ;
(c) dissoudre la composition obtenue dans le mélange solvant de solvants ;
(d) ajouter un photo-initiateur de polymérisation à la composition résultante ;
(e) filtrer la composition de l'étape (d) ; et
(f) appliquer ladite composition à la surface dudit support.

2. Procédé selon la revendication 1, dans lequel la substance polymérisable (PS) est choisie parmi le groupe consistant en bis (3,4-époxycyclohexylméthyl) adipate, néopentyl glycol diglycidyl éther; triméthylol propanetriglicidyl éther, diéthylène glycol, 3,4-époxycyclohexylméthyl-3,4-époxycyclohexane carboxylate, triméthylolpropane trivinyl éther, ε-caprolactone triol, poly(vinylchlorure-co-vinylacétate-co-2-hydroxypropyl acrylate) hydroxyle, poly(o-crésyl glycidyl éther) co-formaldehyde, époxyde cycloaliphatique 4206, poly(vinylchlorure-co-isobutyl vinyl éther et poly(vinylformal).

3. Procédé selon les revendications 1 et 2, dans lequel le mélange solvant comprend une ou plusieurs cétones choisies parmi le groupe consistant en isobutyl-méthylcétone, 3-méthyl-2-butanone, acétone, méthyl éthyl cétone et leurs mélanges.

4. Procédé selon les revendications 1 et 2, dans lequel le mélange solvant comprend l'isobutylcétone.

5. Procédé selon la revendication 1, dans lequel le photo-initiateur de polymérisation dans l'étape (d) est choisi parmi le groupe consistant en sel d'hexafluorophosphate de triarylsulfonium et/ou sel d'hexafluoroantimonate de triarylsulfonium.

6. Procédé selon la revendication 1, dans lequel le colorant fluorescent (FD) est choisi parmi le groupe consistant en oxazine-1, rhodamine-700, rhodamine-800 et l'acide bis(2,6-diisopropylanilide) pérylène-1,6,7,12-tétraphénoxy-3,4,9,10-tétracarboxylique.

7. Procédé selon les revendications 1 à 6, dans lequel les solvants sont choisis parmi le groupe consistant en cétones ayant une température d'ébullition de 98°C à 120°C et d'autres solvants ayant la température d'ébullition non supérieure à environ 80°C.

8. Procédé selon les revendications 1 à 7, dans lequel la dissolution de la composition PS-FD est réalisée en agitant ladite composition pendant quatre heures à 60°C pour obtenir une solution homogène à 4 %.

9. Procédé selon les revendications 1 à 8, comprenant un support d'information fluorescent multicouche, dans lequel chaque couche est informée séparément et reliée conjointement sous forme d'une unité.
